# EUROPÄISCHE PATENTANMELDUNG

(11) **EP 3 778 446 A1**
(43) Veröffentlichungstag der Anmeldung: **17.02.2021**
(21) Anmeldenummer: 20184410.7
(22) Anmeldetag: 07.07.2020
(51) Int. Cl.: B65G 54/02

(54) **TRANSPORTEINRICHTUNG IN EINER BEARBEITUNGSANLAGE ZUR BEARBEITUNG EINES WERKSTÜCKS**

(30) Priorität: 12.08.2019 DE 102019121633
(71) Anmelder: MD Elektronik GmbH, 84478 Waldkraiburg (DE)
(72) Erfinder: Strauß, Benedikt, 83559 Mittergars (DE); Harrer, Helmut, 84478 Waldkraiburg (DE)

(57) **Zusammenfassung**

Vorgeschlagen wird eine Transporteinrichtung (100, 200, 300) in einer Bearbeitungsanlage (1000) zur Bearbeitung eines Werkstücks. Die Transporteinrichtung (100, 200, 300) umfasst: einen Werkstückträger (200) mit einem Aufnahmeteil (230) zur Aufnahme des zu bearbeitenden Werkstücks und einem über ein Kopplungsteil (220) an den Aufnahmeteil (230) gekoppelten Auflageteil (210); einen eine Transportrichtung (R) definierenden Förderriemen (110), wobei der Förderriemen (110) ausgebildet ist zum Transportieren des Werkstückträgers (200) entlang der Transportrichtung (R); und eine Führung (300) zum Führen des Aufnahmeteils (230) entlang der Transportrichtung (R) zu einzelnen Bearbeitungsstationen (500-A, 500-B) der Bearbeitungsanlage (1000). Eine Anziehungskraft zwischen dem Auflageteil (210) und einem jeweiligen Förderriemen (110) ist magnetisch erzeugt.

## Beschreibung

Die Erfindung betrifft Ausführungsformen einer Transporteinrichtung in einer Bearbeitungsanlage zur Bearbeitung eines Werkstücks.

Zur Bearbeitung eines Werkstücks, beispielsweise eines abgelängten Kabelabschnitts, wird der Kabelabschnitt üblicherweise durch eine Transporteinrichtung automatisiert zu einzelnen Bearbeitungsstationen einer Bearbeitungsanlage transportiert. An jeder Bearbeitungsstation wird das Werkstück stationär gehalten, sodass eine Bearbeitung möglich ist. Nach der Bearbeitung erfolgt der Transport zur nächsten Bearbeitungsstation. Das Werkstück liegt auf einem Werkstückträger auf, der wiederum auf einem Förderriemen eines Riemenverbundes aufliegt, so dass durch ein Antreiben des Förderriemens der Werkstückträger und damit mittelbar das Werkstück entlang der Erstreckung des Förderriemens transportiert werden kann.

Eine Bearbeitungsanlage für die Bearbeitung von abgelängten Kabelabschnitten ist beispielsweise aus der EP 2 871 736 A1 bekannt. Bei dieser Bearbeitungsanlage sind mehrere, voneinander getrennte Bearbeitungsstationen vorgesehen. Für den vollautomatischen Betrieb ist dort eine Transportvorrichtung zum Transport von abgelängten Kabeln von und zu den Stationen installiert.

Es ist bekannt, zur Bewirkung des Transports Förderriemen einzusetzen, die beispielsweise nach Art eines Riemenverbunds sequentiell, als Abfolge von jeweils benachbarten Förderriemen in Förderrichtung, angeordnet sind, um einen längeren Transportweg in der Bearbeitungsanlage zu ermöglichen.

Die EP 1 275 601 B1 beschreibt beispielsweise mit Bezug auf die dortige Fig. 3 eine Transporteinrichtung für die Bearbeitung von Kabeln. Ein Werkstückträger weist an seiner Unterseite ein Zahnprofil auf, das mit hervorstehenden Zähnen in ein entsprechendes Profil eines Riemenantriebs in formschlüssigen Eingriff steht.

DE 44 37 364 A1 beschreibt eine Transporteinrichtung in einer Bearbeitungsanlage zur Bearbeitung von Werkstücken wie Schalterteilen, die an verschiedenen Stationen der Bearbeitungsanlage sequentiell montiert und geprüft werden. Die Transporteinrichtung umfasst mehrere Werkstückträger, die jeweils als Schlitten bzw. als Wagen mit Rädern ausgebildet auf einer Bahn eines Transportbandes vertikal angeordnet sind. Ein mittels Umlenkrollen kontinuierlich angetriebenes Transportband besteht aus einem ferromagnetischen Werkstoff, wie Stahl oder dergleichen, so dass die Werkstückträger mittels Magnetkraft an das Transportband angekoppelt sind. Die Werkstückträger bestehen aus Metall, beispielsweise aus Stahl, und weisen eine Koppelfläche senkrecht zu der Bahn auf. In der Koppelfläche der Werkstückträger sind Permanentmagnete angeordnet. Auf der der Bahn gegenüberliegenden Oberfläche des Werkstückträgers befindet sich jeweils eine Aufnahme, in die das zu bearbeitende Werkstück, insbesondere der teilweise montierte Schalter, aufgenommen ist. Das Werkstück liegt insbesondere unmittelbar auf dem Werkstückträger auf.

DE 10 2016 125 533 A1 beschreibt eine Transporteinrichtung in einer Bearbeitungsanlage mit zwei endlos umlaufenden Förderriemen und mit Mitnahmeeinrichtungen für das Fördergut, wobei die jeweilige Mitnahmeeinrichtung mittels eines Magneten an das ferromagnetische erste Förderband gekoppelt ist. Die Mitnahmeeinrichtung ist flexibel ausgebildet, beispielsweise als Abfolge von aneinander gelenkig gekoppelten Kettengliedern, um einer Kurve folgen zu können. Die beiden Förderriemen, von denen mindestens der erste ferromagnetisch ist, sind in einer C-förmigen Aufnahme aufgenommen, weiter sind Magnete in die Mitnahmeeinrichtung eingelassen. Die Mitnahmeeinrichtung weist einen Auflageabschnitt auf, der eine flache Auflagefläche für einen Werkstückträger bietet.

Aufgabe der vorliegenden Erfindung ist es, eine hinsichtlich Flexibilität, Komplexität und Dynamik verbesserte Transporteinrichtung für eine Bearbeitungsanlage zur Bearbeitung eines Werkstücks vorzuschlagen.

Hiervon ausgehend wird der Gegenstand des unabhängigen Anspruchs 1 vorgeschlagen. Merkmale einiger Ausführungsbeispiele sind in den abhängigen Ansprüchen angegeben. Die Merkmale der abhängigen Ansprüche können miteinander zur Ausbildung weiterer Ausführungsformen kombiniert werden, sofern nicht ausdrücklich etwas Anderes angegeben ist.

Gemäß einem ersten Aspekt wird eine Transporteinrichtung in einer Bearbeitungsanlage zur Bearbeitung eines Werkstücks vorgeschlagen. Die Transporteinrichtung umfasst: einen Werkstückträger mit einem Aufnahmeteil zur Aufnahme des zu bearbeitenden Werkstücks und einem über ein Kopplungsteil an den Aufnahmeteil gekoppelten Auflageteil; einen eine Transportrichtung definierenden Förderriemen, wobei der Förderriemen ausgebildet ist zum Transportieren des Werkstückträgers entlang der Transportrichtung; und eine Führung zum Führen des Aufnahmeteils entlang der Transportrichtung zu einzelnen Bearbeitungsstationen der Bearbeitungsanlage. Eine Anziehungskraft zwischen dem Auflageteil und dem Förderriemen ist magnetisch erzeugt. Hierzu ist das Auflageteil gemäß einer Ausführungsform als flächig auf dem Förderriemen aufliegender, in Hinblick auf die magnetische Anziehungskraft modifizierter Reibschuh ausgebildet.

Nachstehend werden einige Ausführungsformen beschrieben:
Bei der Bearbeitungsanlage handelt es sich z.B. um eine Anlage zur Bearbeitung von abgelängten Kabelabschnitten, insbesondere von Abschnitten eines Kabels zur elektrischen und / oder optischen bzw. optoelektronischen Datenübertragung, speziell auch zur Übertragung von elektrischen und optischen Datensignalen durch ein einzelnes Kabel. Grundsätzlich kommen jedoch Werkstücke jedweder Art in Betracht, die in einer Bearbeitungsanlage mit räumlich verteilten Bearbeitungsstationen stationär, also für einen bestimmten Bearbeitungszeitraum ortsfest an definierten Positionen, zu bearbeiten sind.

Der Werkstückträger umfasst die drei Komponenten Aufnahmeteil, Kopplungsteil und Auflageteil (das hier auch als Transportteil bezeichnet wird und als modifizierter Reibschuh ausgebildet sein kann). Das Aufnahmeteil nimmt das Werkstück, also beispielsweise den abgelängten Kabelabschnitt, auf. Das Aufnahmeteil ist entsprechend dem zu bearbeitenden Werkstück sowie entsprechend den einzelnen Bearbeitungsstationen ausgebildet. Bereits an dieser Stelle sei angemerkt, dass das Kopplungsteil auch als Teil des Aufnahmeteils oder als Teil des Auflageteils ausgebildet sein kann.

Das Aufnahmeteil umfasst gemäß einer Ausführungsform einen Wagen, der in einer Führung geführt ist. Beispielsweise kann der Wagen mittels einer Gleitführung, einer Kugelführung oder einer Rollenführung in der Führung, die als Schiene oder als Nut ausgebildet sein kann, geführt sein. Insbesondere ist der Wagen mit den Rollen einer Kugelumlaufführung in der als Schiene oder Nut ausgebildeten Führung geführt. Die Führung kann oberhalb des Förderriemens angeordnet sein, und von dem Aufnahmeteil erstreckt sich in vertikaler Richtung das Kopplungsteil hin zum Auflageteil. Die Führung nimmt dabei insbesondere das Gewicht des Aufnahmeteils (sowie des darin aufgenommenen Werkstücks) und, gemäß einer Ausführungsform, auch das Gewicht des an dem Aufnahmeteil befestigten Kopplungsteils auf und stützt das Gewicht in der Schiene bzw. der Nut der Führung ab. Sofern das Kopplungsteil starr mit dem Auflageteil verbunden ist bzw. einen Teil des Auflageteils bildet, nimmt die Führung nur das Gewicht des Aufnahmeteils auf.

Die Führung kann in Bezug auf den Förderriemen grundsätzlich beliebig beabstandet angeordnet sein. Gemäß einer anderen Ausführungsform ist die Führung unterhalb des Förderriemens angeordnet.

Das Kopplungsteil bildet die Kopplung zwischen dem Aufnahmeteil und dem Auflageteil aus und hält bei einer Ausführungsform das zu bearbeitende Werkstück von einem Magneten in dem Auflageteil so weit beabstandet, dass die Bearbeitung des Werkstücks unbeeinflusst oder zumindest ungestört von einem Magnetfeld des in dem Auflageteil aufgenommenen Magneten erfolgen kann. Das Kopplungsteil ersetzt bei einer Ausführungsform eine magnetische Abschirmung, die vorgesehen sein müssten, wenn das Werkstück beispielsweise empfindliche elektronische Komponenten umfasst, die durch das Magnetfeld des in dem Auflageteil eingelassenen Magneten beeinflusst werden könnten. Das Kopplungsteil hält gemäß einer weiteren Ausführungsform zusätzlich den angetriebenen Förderriemen räumlich beabstandet von dem Aufnahmeteil, an dem mindestens ein Anschlag für einen Stopper angeordnet sein kann, wobei an dem mindestens einen Anschlag ein ausfahrbarer Stopper angreifen kann, um den Werkzeugträger an einer Bearbeitungsstation zu stoppen und für die Dauer der Bearbeitung des Werkstücks zu halten. Dabei ist der Stopper an der Bearbeitungsstation und der Anschlag an dem Werkstückträger, nämlich durch das das Kopplungsteil beabstandet von dem angetriebenen Förderriemen, angeordnet. An der Bearbeitungsstation fährt der Stopper aus, so dass eine Stoppernase an dem Anschlag anliegen kann und das Aufnahmeteil anhalten kann. Auf weitere Einzelheiten des Kopplungsteils wird an späterer Stelle eingegangen werden.

Anstelle nur eines einzigen Förderriemens ist gemäß einer Ausführungsform ein Riemenverbund vorgesehen, mit einer Anzahl von in Transportrichtung sequentiell angeordneter Förderriemen. Der Riemenverbund kann ein geschlossener, also endloser Riemenverbund sein. Der Riemenverbund transportiert den Werkstückträger entlang der Transportrichtung, und zwar durch entsprechenden Antrieb des jeweiligen Förderriemens. Dazu liegt das Auflageteil des Werkstückträgers auf dem jeweiligen angetriebenen Förderriemen auf.

Der Riemenverbund und die Führung sind somit bei einer linearen Anordnung der Bearbeitungsstationen entlang der Transportrichtung zueinander im Wesentlichen parallel ausgerichtet bzw. bei einer kreisförmigen Anordnung der Bearbeitungsstationen (beispielsweise bei einem Rundtakter) konzentrisch zueinander ausgerichtet. Die Führung führt das Aufnahmeteil, und die Bewegung des Werkstückträgers erfolgt aufgrund einer Kopplung zwischen dem Auflageteil und den angetriebenen einzelnen Förderriemen des Riemenverbunds, wobei die Kopplung zusätzlich zu der unvermeidlichen Reibung zwischen dem Auflageteil und dem mindestens einen angetriebenen Förderriemen durch die magnetische Anziehungskraft zwischen dem Auflageteil und dem Förderriemen vermittelt wird.

Das Auflageteil ist z.B. als modifizierter Reibschuh ausgebildet. Zwischen dem Auflageteil und dem jeweiligen Förderriemen wird eine Anziehungskraft magnetisch erzeugt, so dass die für den Antrieb des Werkstückträgers erforderliche Haftung zwischen dem jeweiligen Förderriemen und dem Auflageteil nicht allein durch die Gewichtskraft des Auflageteils und nicht durch einen Formschluss erzeugt wird, sondern magnetisch. Insbesondere wird die Haltekraft, mit der der Werkstückträger über das Auflageteil an dem Förderriemen gehalten wird, wesentlich durch die magnetische Kraft bestimmt und nur noch teilweise durch die Reibung aufgrund des Kontaktes des Auflageteils mit dem Förderriemen.

So kann beispielsweise der Riemenverbund in einem Dauerbetrieb eingestellt sein, bei dem sich die Förderriemen kontinuierlich, insbesondere zeitlich ununterbrochen, insbesondere mit einer im Wesentlichen konstanten Geschwindigkeit, bewegen und so den Transport des Werkstückträgers von Bearbeitungsstation zu Bearbeitungsstation ermöglichen. Die jeweiligen Bearbeitungsstationen können ausgebildet sein, das Aufnahmeteil an der Führung zu stoppen, und aufgrund der Ausbildung des Auflageteils, das nach einer Ausführungsform keinen Formschluss mit dem jeweiligen Förderriemen ausbildet, ist ein Staubetrieb möglich, bei dem der Werkstückträger an der jeweiligen Bearbeitungsstation stationär gehalten wird, ohne dass der Dauerbetrieb des Riemenverbunds aufgegeben wird. Ein ständiges Starten und Stoppen der Bewegung der Förderriemen ist somit nicht erforderlich. Als Staubetrieb wird hier z.B. ein Betrieb des mindestens einen Förderriemen des Riemenverbunds bezeichnet, bei dem ein erster Werkstückträger an einer Bearbeitungsstation gestoppt wird und so lange gehalten wird, bis sich mindestens ein nachfolgende Werkstückträger an dem zuerst gestoppten Werkstückträger anreiht. Dabei entsteht an einer definierten Bearbeitungsstation eine Aneinanderreihung von aneinander anliegenden Werkstückträgern, wobei jeder Werkstückträger der Aneinanderreihung durch die in Förderrichtung vor ihm liegenden gestoppt wurde und in Ruhestellung gehalten wird. Bei diesem Staubetrieb wird der mindestens eine Förderriemen des Riemenverbundes weiter laufend in Transportrichtung mit einer definierten Fördergeschwindigkeit betrieben, so dass zwischen dem angetriebenen Förderriemen und den jeweiligen gestoppten Werkstückträgern eine erhöhte Reibung, speziell eine zusätzliche Gleitreibung, auftritt.

Gemäß einer Ausführungsform weist die durch das Kopplungsteil bewirkte Kopplung zwischen dem Aufnahmeteil und dem Auflageteil ein Spiel in vertikaler Richtung auf. Beispielsweise ist die Führung zum Führen des Aufnahmeteils des Werkstückträgers als starre Schiene bzw. Nut ausgebildet, und die Kopplung zwischen dem Kopplungsteil und dem Aufnahmeteil kann starr ausgebildet sein. Das Auflageteil kann hingegen in vertikaler Richtung beweglich an/in dem Kopplungsteil gelagert sein, um beispielsweise Höhenunterschiede zwischen aneinander angrenzenden Förderriemen des Riemenverbunds auszugleichen. Allgemein dient die in vertikaler Richtung bewegliche Lagerung des Auflageteils an oder in dem Kopplungsteil zum Ausgleich von Toleranzen, die sich im System zwischen dem Förderriemen, dem Auflageteil und dem mit dem Kopplungsteil verbundenen Aufnahmeteil ausbilden können. Beispielsweise lassen sich auch Toleranzen ausgleichen, die auf einem Verschleiß der Förderriemen zurückgehen. Der Toleranzausgleich dient jeweils dazu sicherzustellen, dass das in dem Aufnahmeteil aufgenommene Werkstück an der jeweiligen Bearbeitungsposition eine definierte vertikale Stellung über einen langen Zeitraum einnehmen kann.

Weiter ist es zweckmäßig, dass die durch das starre Kopplungsteil bewirkte Kopplung zwischen dem Aufnahmeteil und dem Auflageteil eine Verkippung des Auflageteils bezogen auf eine durch eine jeweiligen Förderriemen ausgebildete Auflagefläche, zulässt. Ist zum Beispiel der nächste Förderriemen gegenüber dem aktuellen Förderriemen leicht erhöht, so kann dieser Höhenunterschied durch eine entsprechende Verkippung des in Transportrichtung weisenden vorderen Teils des Auflageteils auf einfache Weise ausgeglichen werden. Diese Art der Ausbildung des Werkstückträgers lässt somit die Fertigung und/oder Installation des Riemenverbunds mit vergleichsweise großen Toleranzen zu.

Zur Ausbildung der magnetischen Kraft zwischen dem Auflageteil und dem jeweiligen Förderriemen des Riemenverbunds kann das Auflageteil mit einer Anzahl Permanentmagnete bestückt sein, die mit dem jeweils magnetisch leitfähigen Förderriemen einen geschlossenen magnetischen Kreis ausbilden.

Alternativ oder zusätzlich ist auch die Erzeugung einer Magnetkraft durch aktive Maßnahmen, wie der Bestromung einer Spule in dem Auflageteil möglich. Dazu kann der Werkstückträger beispielsweise mit einer Batterie ausgestattet sein sowie einer entsprechenden Steuerungslogik. Sofern derartige Maßnahmen getroffen werden, ist beispielsweise auch die Reduzierung oder Abschaltung der magnetischen Anziehungskraft an den Positionen der Bearbeitungsstationen möglich, wodurch der Verschleiß des Auflageteils und/oder des betreffenden Förderriemens reduziert wird.

Einfacher ist die Ausstattung des Auflageteils mit mindestens einem Permanentmagneten, insbesondere mit einer Anzahl von Permanentmagneten, bspw. so, dass so der gesamte Werkstückträger einschl. des Kopplungsteils und des Auflageteils passiv, also ohne aktiv gesteuerte Komponenten und ohne entsprechende Signal- sowie Leistungsanschlüssen ausgebildet sein kann.

Die Anzahl Permanentmagnete ist gemäß einer Ausführungsform über eine Schutzabdeckung in dem Auflageteil integriert und über die Schutzabdeckung setzt das Auflageteil an dem jeweiligen Förderriemen, beispielsweise an einer glatten Außenseite des Riemens, auf. So kann eine Beschädigung der üblicherweise empfindlichen Oberflächen der Permanentmagnete vermieden werden, insbesondere während des oben beschriebenen Staubetriebs, während dem der dauerbetriebene Förderriemen an dem Auflageteil reibt, ohne diesen fortzubewegen. Die Schutzabdeckung kann aus einem Blech ausgebildet sein, oder aus einer Kunststofffolie oder ähnlichen Materialien.

Zweckmäßig ist es außerdem, die Schutzabdeckung an den jeweiligen Enden des Auflageteils abgerundet auszugestalten oder mit einer Fase zu versehen, um einen störungsfreien Übergang zwischen aneinander angrenzenden Förderriemen zu ermöglichen. Die abgerundete Ausgestaltung der Schutzabdeckung an den jeweiligen Enden des Auflageteils bzw. die Fase bietet den weiteren Vorteil, während des Staubetriebs bzw. während des Anhaltens eines einzelnen Werkstückträgers zur Bearbeitung an einer Bearbeitungsstation eine Beschädigung des Riemens durch eine scharfe Kante, speziell ein Aufschaben der Oberfläche des Kunststoff-Materials des Förderriemens, zu unterdrücken.

Speziell ist gemäß einer Ausführungsform vorgesehen, dass das Auflageteil für den Transport über eine solche Übergangsstelle zwischen zwei aneinander angrenzende Förderriemen zumindest einen Permanentmagneten an einem vorderen Ende des Auflageteils und mindestens einen Permanentmagneten an einem hinteren Ende (jeweils bezogen auf die Transportrichtung) aufweist. Während des Übergangs wird somit die Anziehungskraft zum einen zwischen dem Permanentmagneten an dem vorderen Ende und dem übernehmenden Förderriemen und zum anderen zwischen dem Permanentmagneten an den hinteren Ende und dem übergebenden Förderriemen ausgebildet. Gelangt das in Transportrichtung vordere Ende des Auflageteils außer Anlage mit dem Förderriemen, wird das Auflageteil mindestens noch durch den an dem in Förderrichtung hinteren Ende auf dem Förderriemen anliegend gehalten, so dass das Auflageteil bei der Übergabe von dem ersten Förderriemen zu dem zweiten Förderriemen nicht oder nur unwesentlich kippen kann. Weiter stellt die Anordnung mindestens eines ersten Permanentmagneten an dem in Transportrichtung vorderen Ende des Auflageteils sowie mindestens eines zweiten Permanentmagneten an dem in Transportrichtung hinteren Ende des Auflageteils sicher, dass bei einer Übergabe des Auflageteils von einem übergebenden (ersten) Förderriemen zu einem in Förderrichtung übernehmenden (zweiten) Förderriemen eine stetige Kopplung des Werkstückträgers mit dem jeweils angetriebenen Förderriemen und somit ein stetiger Vortrieb Werkstückträgers gewährleistet ist.

In einer Ausgestaltung ist zwischen dem vorderen (ersten) und dem hinteren (zweiten) Permanentmagneten mindestens ein weiterer Permanentmagnet vorgesehen. Reicht die Anziehungskraft aus, die durch die beiden Permanentmagneten an den Enden des Auflageteils vorgesehen sind, sind jedoch keine weiteren Permanentmagneten notwendig (und somit ein geringes Gewicht des Werkstückträgers möglich); ist eine höhere Anziehungskraft gewünscht, kann auch zwischen diesen beiden Permanentmagneten mindestens ein weiterer Permanentmagneten vorgesehen sein.

Zur Ausbildung der magnetischen Anziehungskraft ist es zweckmäßig, dass die Förderriemen jeweils zumindest teilweise magnetisch leitfähig ausgebildet sind. Gemäß einer Ausführungsform sind die Förderriemen jeweils im Wesentlichen aus einem Kunststoff gefertigt, der eine oder mehrere Stahlseelen bzw. Stahladern integriert, wobei die Stahlseelen bzw. die Stahladern magnetisch leitfähig sind in dem Sinne, dass ein äußeres Magnetfeld, nämlich das Magnetfeld des bzw. der von dem Auflageteil aufgenommenen Permanentmagneten, durch die Stahlseelen bzw. die Stahladern geführt wird und zwischen den magnetischen Polen des jeweiligen Permanentmagneten über die Stahlseelen bzw. über die Stahladern ein magnetischer Kreis geschlossen wird. Die bauliche Integration von Stahlseelen bzw. Stahladern ist bei der Herstellung von Förderriemen bekannt, so dass auf Standardförderriemen zurückgegriffen werden kann. Die Verwendung eines Förderriemens oder mehrerer Förderriemen mit jeweils magnetisch leitfähigen Stahlseelen bzw. magnetisch leitfähigen Stahladern liegt somit im Rahmen der Erfindung.

Andere Varianten zur Ausbildung der magnetischen Anziehungskraft zwischen dem Auflageteil und dem jeweiligen Förderriemen sind selbstverständlich möglich. So wäre es auch denkbar, dass die Förderriemen jeweils permanentmagnetisch ausgebildet sind, und das Auflageteil ein entsprechend magnetisch leitfähiges Material umfasst, das einen hohen magnetischen Fluss zulässt, so dass ein magnetischer Kreis zwischen Abschnitten des permanentmagnetischen Förderriemens und dem Auflageteil geschlossen werden kann. Förderriemen mit eingearbeiteten Permanentmagneten sind grundsätzlich bekannt und können im Rahmen der vorstehenden Anordnung Verwendung finden.

Zweckmäßig ist jedoch die Ausbildung der magnetischen Anziehungskraft auf Basis von Permanentmagneten, so dass der Werkstückträger wenig komplex ausgestaltet sein kann; insbesondere muss dann der Werkstückträger für die Zwecke des Transports nicht mit einer elektrischen Leistung versorgt werden, und auch keine Batterie ist mitzuführen, die z.B. zweckmäßig wäre, wenn eine Spule zu versorgen ist, um ein magnetisches Feld zu erzeugen.

Auch der Antrieb der Transporteinrichtung kann somit im Wesentlichen einfach, also insbesondere durch einen einfachen leistungsstarken Elektromotor ohne aufwendige Steuerschaltung, ausgestaltet sein. Zur Bewirkung des Transports muss lediglich der jeweilige Förderriemen elektrisch versorgt werden, wobei auch hier kein Start- und Stoppbetrieb notwendig ist, so dass die Transporteinrichtung insgesamt energiesparend sowie mit wenig Steuerungsaufwand betrieben werden kann.

Bei einer Ausführungsform bildet das Kopplungsteil entweder einen Teil des Aufnahmeteils oder einen Teil des Auflageteils aus. Beispielsweise hält das Kopplungsteil das Auflageteil, das durch den Förderriemen transportiert wird, räumlich beabstandet von dem Aufnahmeteil. Das Gewicht des Aufnahmeteils (ggf. einschl. des Werkstücks) wird von der Führung aufgenommen, so dass auf dem möglicherweise empfindlichen Förderriemen nur das geringe Gewicht des Auflageteils sowie ggf. des Kopplungsteils (z. B. wenn dieses fest mit dem Auflageteil verbunden ist und/oder einen Teil davon ausbildet). Die Führung dient dabei vorrangig der genauen Positionierung des Werkstückträgers an den einzelnen Bearbeitungsstationen. Das Kopplungsteil kann fest an dem Auflageteil angeordnet sein; Mittel (z.B. die weiter unten genannten Langlöcher), die einen Höhenausgleich zwischen Auflageteil und Aufnahmeteil bewirken, sind dann an dem vertikal oberen Ende des Auflageteils angeordnet und koppeln dort an das Aufnahmeteil an. Entsprechend kann das Kopplungsteil alternativ auch an dem Aufnahmeteil fest angeordnet sein, insbesondere kann das Kopplungsteil ein nach unten, zu dem Förderriemen hin versetzter Abschnitt des Aufnahmeteils sein.

Weitere Einzelheiten und Vorteile der Erfindung werden bei der nachfolgenden Beschreibung einiger Ausführungsbeispiele anhand der Figuren deutlich werden.

Es zeigen:
- Fig. 1: exemplarisch und schematisch einen Abschnitt einer Transporteinrichtung in einer Bearbeitungsanlage gemäß einer oder mehreren Ausführungsformen;
- Fig. 2: exemplarisch und schematisch einen Abschnitt einer Transporteinrichtung gemäß einer oder mehreren Ausführungsformen;
- Fig. 3: exemplarisch und schematisch einen Abschnitt eines Auflageteils eines Werkstückträgers einer Transporteinrichtung gemäß einer oder mehreren Ausführungsformen;
- Fig. 4: exemplarisch und schematisch einen Abschnitt einer Transporteinrichtung gemäß einer oder mehreren Ausführungsformen; und
- Fig. 5: exemplarisch und schematisch einen Abschnitt einer Transporteinrichtung gemäß einer oder mehreren Ausführungsformen.

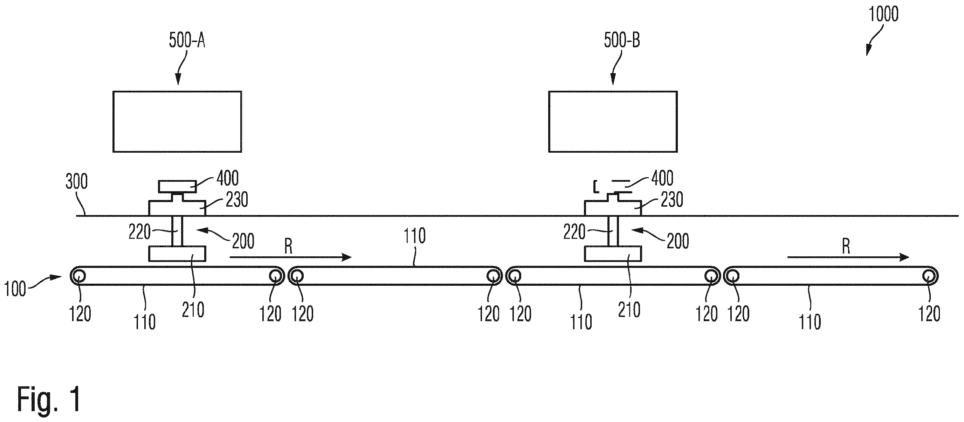

Figur 1 zeigt schematisch und exemplarisch eine Transporteinrichtung 100, 200, 300 in einer Bearbeitungsanlage 1000 zur Bearbeitung eines Werkstücks.

Die Bearbeitungsanlage 1000 ist beispielsweise eine Anlage zur Bearbeitung eines abgelängten Kabelabschnitts. Das Werkstück kann also ein abgelängter Kabelabschnitt sein, der in einem Leitungsspanner 400 in einer definierten Stellung aufgenommen ist und dessen zu bearbeitende Kabelenden in dem Leitungsspanner 400 fixiert sind.

Die Transporteinrichtung umfasst im Wesentlichen drei Komponenten, nämlich den Riemenverbund 100, den Werkstückträger 200 (oder mehrere davon) sowie die Führung 300.

Die Transporteinrichtung transportiert das Werkstück von einer ersten Bearbeitungsstation 500-A zu einer zweiten, in Förderrichtung nachgelagerten Bearbeitungsstation 500-B innerhalb der Bearbeitungsanlage 1000. In der Figur 1 sind die zwei Bearbeitungsstationen 500-A und 500-B rein schematisch dargestellt. Bei der ersten Bearbeitungsstation 500-A erfolgt ein erster Bearbeitungsschritt zur Bearbeitung des Werkstücks, und bei der räumlich von der ersten Bearbeitungsstation 500-A entfernten zweiten Bearbeitungsstation 500-B erfolgt ein zweiter Bearbeitungsschritt zur Bearbeitung des bereits von der ersten Bearbeitungsstation 500-A bearbeiteten Werkstücks.

Es versteht sich, dass die Bearbeitungsanlage 1000 mehr als nur zwei Bearbeitungsstationen aufweisen kann. Die einzelnen Bearbeitungsstationen sind beispielsweise in einer Linearrichtung hintereinander angeordnet. Es sind jedoch auch Ausführungsformen denkbar, bei denen die Transportrichtung R einen nichtlinearen Verlauf, beispielsweise einen kreisförmigen Verlauf oder eine Abweichung davon beschreibt, wobei dieser Verlauf mit mindestens einem Förderriemen 110, üblicherweise mehreren Förderriemen gebildet wird.

Der Riemenverbund 100 ist durch eine Anzahl von in Transportrichtung R hintereinander angeordneter Förderriemen 110 ausgebildet, die jeweils durch einen oder mehrere entsprechende Antriebsräder 120 angetrieben werden. Je nach Ausbildung der Bearbeitungsanlage 1000 können die einzelnen Förderriemen 110 angeordnet und ausgebildet sein. Eine Erstreckung der Förderriemen 110 in Transportrichtung R beträgt beispielsweise etwa 1 m oder einige Meter. Durch eine entsprechende Anordnung und eine entsprechende Anzahl von Förderriemen 110 kann ein beliebig geformter Riemenverbund 100 ausgebildet werden. Eine Ausbildung des Riemenverbunds 100 mit nur einem einzigen Förderriemen 110 liegt im Rahmen der Erfindung. Üblicherweise sind jedoch mehrere Förderriemen 110 vorgesehen, um den Werkstückträger 200 auch entlang längere Distanzen transportieren zu können.

Der Riemenverbund 100 wird beispielsweise in einen Dauerbetrieb versetzt, bei dem sich die Antriebsräder 120 kontinuierlich drehen und so eine kontinuierliche Bewegung der Werkstückträger 200 entlang der Transportrichtung R ermöglichen. Die Transportgeschwindigkeit in Transportrichtung R beträgt beispielsweise einige Meter pro Minute oder mehr.

Die Führung 300 führt den Werkstückträger 200 entlang der Transportrichtung R. D.h., der Riemenverbund 100 bewirkt den Antrieb in Transportrichtung R, und die Führung 300 führt den Werkstückträger 200. Die Führung 300 weist zum Beispiel eine Erstreckung im Wesentlichen parallel zu dem Riemenverbund 100 auf und umfasst eine entlang der Erstreckung übergangslose, durchgehende Schiene und/oder Nut, an der der Werkstückträger 200 angreifen kann. Die durchgehende Schiene und/oder Nut überbrückt dabei auch den Freiraum, der zwischen zwei benachbarten Förderriemen ausgebildet ist. Insbesondere kann die Führung 300 passiv ausgestaltet sein, d.h. die Führung 300 muss nicht selbst den Antrieb des Werkstückträgers 200 bewirken; der Antrieb der Werkstückträger 200 erfolgt bei der dargestellten Ausführungsform ausschließlich über den Riemenverbund 100.

Der Werkstückträger 200 umfasst ein Aufnahmeteil 230 zur Aufnahme des zu bearbeitenden Werkstücks sowie ein Auflageteil 210, das an den Riemenverbund 100 gekoppelt ist. Auf die Kopplung zwischen dem Auflageteil 210 und dem Riemenverbund 100 wird weiter unten näher eingegangen.

Die Führung 300 ist beispielsweise oberhalb des Riemenverbunds 100 angeordnet, so dass sich von dem Aufnahmeteil 230 in vertikaler Richtung ein Kopplungsteil 220 erstreckt, das die Kopplung zu dem Auflageteil 210 ausbildet. Das Aufnahmeteil 230 umfasst eine Platte, an deren Oberseite der Leitungsspanner 400 (Fig. 1) mit dem darin fixierten Werkstück aufgenommen ist, sowie weiter einen an der Platte befestigten Wagen, der mit Rollen einer Kugelumlaufführung, die in der Führung 300 aufgenommen sind, bewegbar ist, so dass das Aufnahmeteil 230 beispielsweise nach Art eines Schienenfahrzeugs bzw. Waggons entlang der Führung 300 bewegt werden kann.

An den einzelnen Bearbeitungsstationen 500-A und 500-B wird der Werkstückträger 200 stationär gehalten, beispielsweise durch eine jeweilige, den Weitertransport aufhaltenden Stoppeinrichtung an der betreffenden Bearbeitungsstation 500-A/500-B. Während des Stillstands des Werkstückträgers 200 kann die Bearbeitung durch die entsprechende Bearbeitungsstation 500-A/500-B erfolgen. Nach Abschluss der jeweiligen Bearbeitung wird der Werkstückträger 200 wieder freigegeben und durch den Dauerbetrieb des Riemenverbunds 100 weiter entlang der Transportrichtung R transportiert.

Zur Ermöglichung dieser Art des Transports des Werkstücks in der Bearbeitungsanlage 1000 ist das Auflageteil 210 des Werkstückträgers 200 als ein Reibschuh 210 ausgebildet, und eine Anziehungskraft zwischen dem Auflageteil 210 und einem jeweiligen Förderriemen 110 ist magnetisch erzeugt. Das Auflageteil 210 ist als Reibschuh ausgebildet, z.B. als im Wesentlichen flaches, quaderförmiges Formteil, das mit einer großen, ebenen Seitenfläche flächig auf der Fläche des Förderriemens 110 aufliegt.

In dem dargestellten Ausführungsbeispiel ist der Riemenverbund 100 in einem Dauerbetrieb eingestellt, bei dem sich die Förderriemen 100 kontinuierlich bewegen und einen Transport in Transportrichtung R jederzeit ermöglichen. Wird der Werkstückträger 200 an den einzelnen Bearbeitungsstationen 500-A, 500-B während dieses Dauerbetriebs des Riemenverbunds 100 jeweils stationär gehalten, wird die Bewegung der Förderriemen 110 nicht angehalten.

Das Auflageteil 210 bildet mit den Förderriemen 110 zur Erzielung der für den Transport erforderlichen Haftung also insbesondere keinen Formschluss aus. Vielmehr wird für den Transport in Transportrichtung R erforderliche Anpressdruck zwischen dem Auflageteil 210 und dem jeweiligen Förderriemen 110 im Wesentlichen durch die magnetische Anziehungskraft zwischen Auflageteil 210 und betreffenden Förderriemen 110 erzielt. Eine hohe Gewichtskraft des Auflageteils 210 ist dafür nicht erforderlich. Insbesondere kann das Auflageteil 210 bzw. der Werkstückträger 200 insgesamt aus einem leichtbauenden Material mit einem geringen spezifischen Gewicht ausgebildet sein, beispielsweise aus einem Leichtmetall wie Aluminium oder einem Kunststoff. Die Ausbildung des Werkstückträgers 200 bzw. von mindestens einer der Komponenten Auflageteil 210, Kopplungsteil 220 und Aufnahmeteil 230 bietet den Vorteil, den Förderriemen 110 mit hoher Geschwindigkeit (bzw. hoher Beschleunigung bei Inbetriebnahme des Förderriemens 110 bzw. bei einem Betrieb des Förderriemens 110 mit unterschiedlichen Geschwindigkeiten) betreiben zu können und zugleich eine feste, sichere Auflage des Auflageteils 210 des Werkstückträgers 200 auf dem Förderriemen 110 sicherzustellen. Die leichtbauende Ausbildung des Werkstückträgers 200, insbesondere die leichtbauende Ausbildung von mindestens einer der Komponenten Auflageteil 210, Kopplungsteil 220 und Aufnahmeteil 230 bietet gerade bei einem Betrieb mit hoher Fördergeschwindigkeit den weiteren Vorteil, Verschleiß zu reduzieren und damit Wartungszeiten zu vermeiden.

Merkmale einiger weiterer Ausführungsformen werden in Bezug auf die weiteren Figuren erläutert.

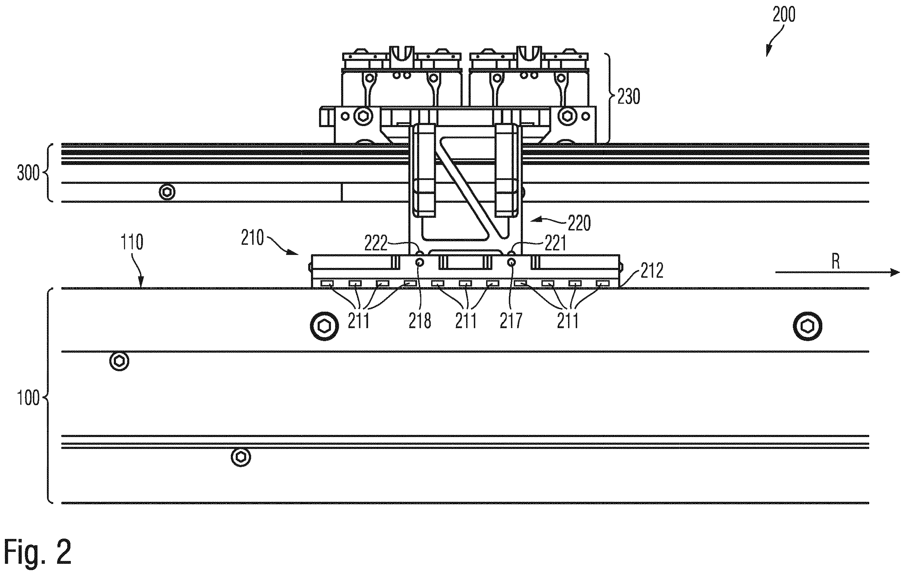

So zeigt die Figur 2 einige beispielhafte Merkmale einer Ausführungsform des Werkstückträgers 200. Das Aufnahmeteil 230 gleitet mittels des Waggons entlang einer Schiene oder Nut der Führung 300. Die Führung 300 ist oberhalb des Riemenverbunds 100 angeordnet, von der in der Figur 2 ein Abschnitt eines Förderriemens 110 gezeigt ist. Der gezeigte Abschnitt des Förderriemens 110 bewegt sich in Transportrichtung R.

Von dem Aufnahmeteil 230 ausgehend erstreckt sich das Kopplungsteil 220 in vertikaler Richtung hin zu dem Auflageteil 210. Eine Schutzabdeckung 212 des Auflageteils 210 integriert eine Anzahl Permanentmagnete 211. Die Schutzabdeckung 212, beispielsweise ein Schutzblech oder eine Schutzfolie, liegt auf dem Förderriemen 110 auf, sodass ein direkter Kontakt zwischen dem bzw. den Permanentmagneten 211 und dem Förderriemen 110 vermieden wird.

Der Förderriemen 110 kann beispielsweise im Wesentlichen aus einem Kunststoff gefertigt sein, der eine oder mehrere Stahladern oder ein sonstiges magnetische leitfähiges, z.B. ferromagnetisches Material integriert, sodass die magnetische Anziehungskraft zwischen dem Auflageteil 210, das die Permanentmagnete 211 integriert, und dem Förderriemen 110 ausgebildet wird. Das Auflageteil 210 weist an der zu dem Förderriemen 110 weisenden Unterseite Aufnahmen auf, in die die Permanentmagnete 211 aufgenommen sind, wobei die Aufnahmen jeweils durch die Schutzabdeckung 212 verschlossen sind, um ein Herausfallen der Permanentmagnete 211 zu verhindern. Die Schutzabdeckung 212 kann insbesondere lösbar an dem Auflageteil 210 angeordnet sein, um im Bedarfsfall die Permanentmagnete 211 austauschen zu können.

Sowohl die Schutzabdeckung 212 also auch die Förderriemen 110 bilden jeweils glatte Außenoberflächen aus, sodass es während des Staubetriebs zu möglichst wenig Reibung zwischen den in Bewegung befindlichen Förderriemen 110 und dem stationären, also für eine Bearbeitungszeit ortsfest gehaltenen, Auflageteil 210 kommt. Insbesondere liegt das Auflageteil 210 mindestens im Bereich der Schutzabdeckung 212 flach, insbesondere, auf der flachen Oberfläche des gestreckten Förderriemens 110 auf.

Andere Varianten zur Ausbildung der magnetischen Anziehungskraft zwischen dem Auflageteil 210 und dem Förderriemen 110 sind bereits weiter oben erläutert worden. Diese Varianten lassen sich auch bei dem dargestellten Ausführungsbeispielen Figur 2 alternativ oder zusätzlich vorsehen.

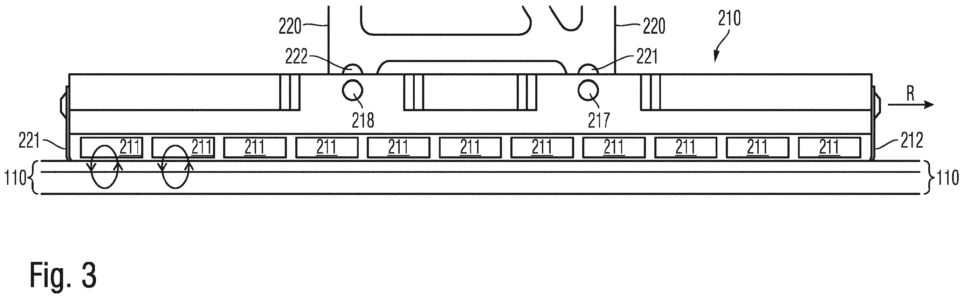

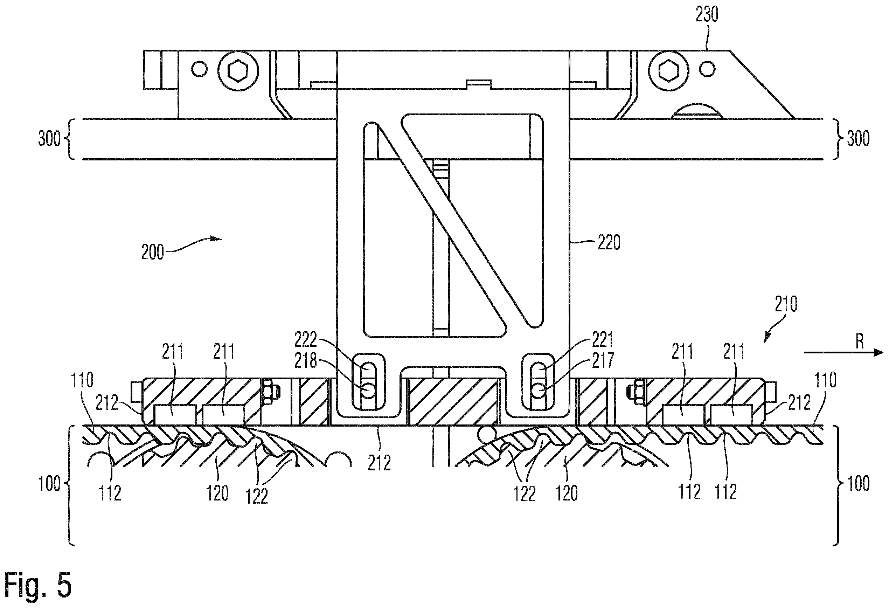

Mit Bezug auf die Fig. 3 bzw. Fig. 5 soll ein weiteres optionales Merkmal des Werkstückträgers 200 erläutert werden. Die Führung 300 ist vertikal oberhalb des Riemenverbunds 100 angeordnet, und das Kopplungsteil 220 erstreckt sich ausgehend von der Führung 300, also ausgehend von dem darauf aufliegenden Aufnahmeteil 230 in vertikaler Richtung hin zu dem Riemenverbund 100, um dort die Kopplung mit dem Auflageteil 210 auszubilden.

Die durch das Kopplungsteil 220 ausgebildete Kopplung zwischen dem Aufnahmeteil 230 und dem Auflageteil 210 weist ein Spiel in vertikaler Richtung auf, beispielsweise von einigen Millimetern bis Zentimetern. Zum Beispiel sind für diese Zwecke in der Struktur des Kopplungsteils 220 im Bereich der Anbindung des Kopplungsteils 220 an das Auflageteil 210 zwei Langlöcher 221 und 222 vorgesehen, in die Stifte 217, 218 des Auflageteils 210 eingreifen, sodass diese darin um die Länge der Langlöcher 221, 222 vertikal beweglich sind. Aufgrund dieser in vertikaler Richtung flexiblen, verschieblichen Führung des Kopplungsteils 220 an dem Auflageteil 210 können zum Beispiel Höhenunterschiede zwischen aneinander angrenzenden Förderriemen 110 ausgeglichen werden. Das Kopplungsteil 220 ist z.B. als flacher Zuschnitt aus beispielsweise einem Blech oder einem Kunststoff ausgebildet, und weist die Gestalt eines viereckigen, innen ausgesparten Rahmens auf, wobei eine Versteifungsstrebe zwischen zwei diagonal gegenüberliegenden Ecken vorgesehen ist. Die lange Kante des Kopplungsteils 220 erstreckt sich vertikal weg von dem Auflageteil 210. Eine Erstreckung des flachen Kopplungsteils 220 in vertikaler Richtung, senkrecht zu der Transportrichtung R, beträgt z.B. mindestens ein Drittel, insbesondere mindestens die Hälfte der Längserstreckung des Auflageteils 210 in Transportrichtung R. Eine vertikale obere Kante des Kopplungsteils 220 ist an der Seite des Aufnahmeteils 230 befestigt. Die Langlöcher 221, 222 bewirken, dass das Gewicht des Aufnahmeteils 230 sowie das Gewicht des Kopplungsteils 220 durch die Schiene in der Führung 300 aufgenommen werden; auf dem Förderriemen 110 liegt das Gewicht nur noch des Auflageteils 210 auf, so dass die mechanische Belastung des Förderriemens 110 reduziert wird.

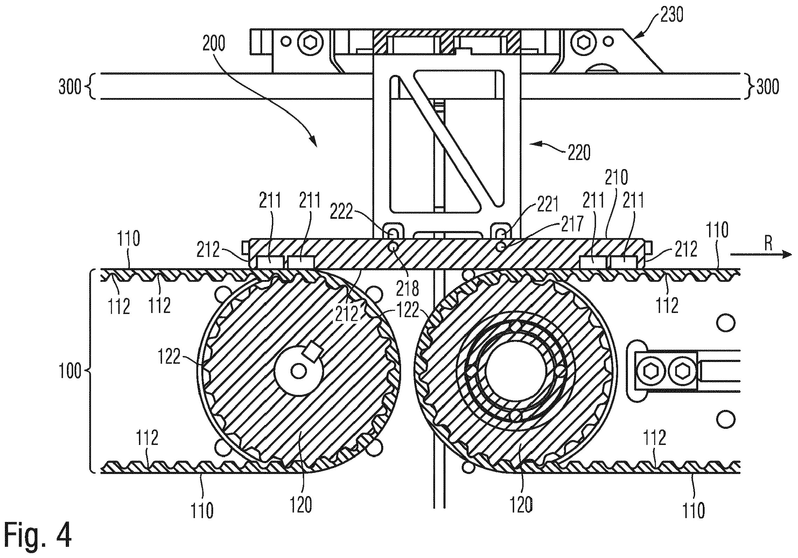

Mit Blick auf diese möglichen Höhenunterschiede ist es weiter zweckmäßig, wie am besten in der Fig. 4 veranschaulicht, dass die durch das Kopplungsteil 220 bewirkte Kopplung zwischen dem Aufnahmeteil 230 und dem Auflageteil 210 eine Verkippung des Auflageteils 210 auf eine durch einen jeweiligen Förderriemen 110 ausgebildete Auflagefläche, zulässt. Um den Ausgleich einer Verkippung des Auflageteils 210 gegenüber dem Aufnahmeteil 230 zu ermöglichen, weisen die Stifte 217, 218 in den jeweiligen Langlöchern 221, 222 ein Spiel in einer Richtung senkrecht zu der Längserstreckung der Langlöcher 221, 222 auf, also ein leichtes Spiel in Förderrichtung des Förderriemens 110.

So sind in der Fig. 4 zwar die beiden aneinander angrenzenden Förderriemen 110 im Wesentlichen auf derselben Höhe dargestellt, jedoch kann die Installation bzw. die Fertigung des Riemenverbunds 100 auch mit größeren Toleranzen erfolgen, sodass beispielsweise der annehmende Fördererriemen 110 etwas höher gelagert ist als der übergebende Förderriemen 110. Der vordere Teil des Auflageteils 210 würde sich dann bei einem Übergang von den übergebenden Förderriemen 110 auf den übernehmenden Förderriemen 110 etwas in die Höhe neigen, ohne dass dies Auswirkungen auf die Lage des Aufnahmeteils 230 hätte.

Weiterhin ist es für diesen Übergang zwischen zwei aneinander angrenzende Förderriemen 110 zweckmäßig, dass die Enden der Schutzabdeckung 212 leicht abgerundet oder mit einer Fase versehen sind. So kann der Übergang störungsfrei bewirkt werden. Auch hat die Abrundung bzw. Fase Vorteile für den Staubetrieb, wie eingangs erläutert.

Nach einer Ausführungsform sind die Permanentmagneten 211 nur an den Enden des Auflageteils 210 vorgesehen, wie in den Fig. 4 und 5 veranschaulicht. Die Anziehungskraft wird somit während des Übergangs zum einen zwischen dem Permanentmagneten 211 am vorderen Ende des Auflageteils 210 sowie den übernehmenden Förderriemen 110 ausgebildet, und zum anderen wird die magnetische Anziehungskraft durch den Permanentmagneten 211 am hinteren Ende und dem übergebenden Förderriemen 110 ausgebildet.

Entsprechend dem vorstehend beschriebenen Dauerbetrieb des Riemenverbunds 100 einerseits und den Staubetrieb an den einzelnen Bearbeitungsstationen 500-A, 500-B, ist es zweckmäßig, dass die Förderriemen 110 an ihren Außenseiten glattflächig, beispielsweise strukturlos ausgebildet sind. Gleiches gilt sinngemäß für die Außenseite der Schutzabdeckung 212. Zur Ermöglichung des Antriebs weisen die Förderriemen 110 an ihren Innenseiten Aussparungen 112 auf, in die Zähne 122 der Antriebsräder 120 eingreifen. Ein Formschluss zwischen dem Auflageteil 210 und den Förderriemen 110 ist nicht erforderlich und in Hinblick auf den weiter oben beschriebenen Staubetrieb oder für die Bearbeitung eines einzelnen, an der Bearbeitungsstation abgestoppten Werkstückträgers hinderlich.

Reicht die durch die an den Enden vorgesehenen Permanentmagneten 211 ausgebildet magnetische Anziehungskraft nicht aus, um eine insbesondere für hohe Beschleunigungen oder hohe Transportgeschwindigkeiten hinreichende Haltekraft zwischen den Förderriemen 110 und dem Auflageteil 210 auszubilden, kann, wie in den Fig. 2 und 3 dargestellt, auch über die gesamte Längsstreckung des Auflageteils 210 hinweg eine durchgehende Abfolge von aneinander angrenzenden Permanentmagneten 211 angeordnet sein. Die Anzahl der Permanentmagnete und / oder die magnetische Feldstärke des jeweiligen Permanentmagneten bietet einen Freiheitsgrad, der von der Anwendung und Dimensionierung der Bearbeitungsanlage 1000 bzw. der Art der zu befördernden Werkstücke abhängt.

Durch die Ausbildung der magnetischen Anziehungskraft mittels der Permanentmagnete 211 und den magnetisch leitfähigen Förderriemen 110 kann auf eine zusätzliche bestromte elektrische Leitung im Bereich der Führung 300 sowie eine stromtragende elektrische Leitung im Bereich des Werkstückträgers 200 verzichtet werden. Diese Komponenten der Transporteinrichtung müssen also nicht zwingend mit einer elektrischen Leistung versorgt werden.

Die einzelnen Bearbeitungsstationen 500-A, 500-B etc. können in einem Abstand von einigen 10 cm bis einigen Metern voneinander entlang der Transportrichtung R beabstandet sein. Die jeweilige Bearbeitungsstation 500-A, 500-B kann jeweils eine Einrichtung zum Aufhalten des Werkstückträgers 200, beispielsweise zum Stoppen des Aufnahmeteils 230 an der Führung 300 aufweisen. Nach Deaktivierung dieser Einrichtung erfolgt der Weitertransport in Transportrichtung R.

Durch den kurzen, geschlossenen Kraftfluss zwischen den Permanentmagneten 211 und den Förderriemen 110 entfallen, zumindest weitgehend, äußere Druckkräfte auf das Auflageteil 210, wodurch die Transporteinrichtung auf eine geringere Gesamtbelastung hin ausgelegt werden kann. Dies ermöglicht insbesondere eine weniger massive, also leichtere Gestaltung der bewegten Werkstückträger 200, was wiederum die benötigte Reibkraft und damit den Verschleiß reduziert. Durch die leichte, kleine und wenig komplex mechanische Auslegung der Transporteinrichtung erzielt diese darüber hinaus Kosten- und auch Bauraumvorteile. Ferner lässt sich der vergleichsweise leicht bauende Werkstückträger schnell verlagern und beschleunigen bzw. abbremsen, was eine Verbesserung (im Hinblick auf kurze Taktzeiten) in einem automatisierten Betrieb darstellt.

Die oben beschriebenen Permanentmagnete 211 sind beispielsweise als quaderförmige Stabmagnete ausgebildet, die an einer flachen Unterseite des Werkstückträgers 200, also in dem Auflageteil, geschützt durch die Schutzabdeckung 212, angeordnet sind. Die magnetische Anziehungskraft ist über die Anzahl bzw. individuelle Stärke der einzelnen Permanentmagnete einstellbar.

## Patentansprüche

1. Transporteinrichtung (100, 200, 300) in einer Bearbeitungsanlage (1000) zur Bearbeitung eines Werkstücks, umfassend:
- einen Werkstückträger (200) mit einem Aufnahmeteil (230) zur Aufnahme des zu bearbeitenden Werkstücks und einem über ein Kopplungsteil (220) an den Aufnahmeteil (230) gekoppelten Auflageteil (210);
- einen eine Transportrichtung (R) definierenden Förderriemen (110), wobei der Förderriemen (110) ausgebildet ist zum Transportieren des Werkstückträgers (200) entlang der Transportrichtung (R); und
- wobei eine Anziehungskraft zwischen dem Auflageteil (210) und dem Förderriemen (110) magnetisch erzeugt ist,
- weiter umfassend eine Führung (300) zum Führen des Aufnahmeteils (230) entlang der Transportrichtung (R) zu einzelnen Bearbeitungsstationen (500-A, 500-B) der Bearbeitungsanlage (1000).

2. Transporteinrichtung (100, 200, 300) nach Anspruch 1, wobei die Transporteinrichtung (100, 200, 300) ausgebildet ist, den Werkstückträger (200) an den einzelnen Bearbeitungsstationen (500-A, 500-B) während eines Dauerbetriebs des Riemenverbunds (100) jeweils stationär zu halten.

3. Transporteinrichtung (100, 200, 300) nach Anspruch 1 oder 2, wobei die Führung (300) oberhalb des Riemenverbund (100) angeordnet ist und sich das Kopplungsteil (220) von der Führung (300) in vertikaler Richtung zum Förderriemen (110) erstreckt, wobei die durch das Kopplungsteil (220) bewirkte Kopplung zwischen dem Aufnahmeteil (230) und dem Auflageteil (210) ein Spiel in vertikaler Richtung aufweist.

4. Transporteinrichtung (100, 200, 300) nach einem der vorstehenden Ansprüche, wobei das Auflageteil (210) mit einer Anzahl Permanentmagnete (211) bestückt ist.

5. Transporteinrichtung (100, 200, 300) nach Anspruch 4, wobei das Auflageteil (210) die Anzahl Permanentmagnete (211) über eine Schutzabdeckung (212) integriert und über die Schutzabdeckung (212) an den Förderriemen (110) aufsetzt.

6. Transporteinrichtung (100, 200, 300) nach Anspruch 4 oder 5, wobei das Auflageteil (210) für den Transport über eine Übergangsstelle zwischen dem Förderriemen (110) und einem angrenzenden Förderriemen (110) zumindest einen Permanentmagneten (211) an einem vorderen Ende des Auflageteils (210) und zumindest einen Permanentmagneten (211) an einem hinteren Ende, bezogen auf die Transportrichtung (R), aufweist.

7. Transporteinrichtung (100, 200, 300) nach einem der vorstehenden Ansprüche, wobei der Förderriemen (110) zumindest teilweise magnetisch leitfähig oder permanentmagnetisch ausgebildet ist.

8. Transporteinrichtung (100, 200, 300) nach einem der vorstehenden Ansprüche, wobei sowohl die Führung (300) als auch der Werkstückträger (200) für die Zwecke des Transports nicht mit einer elektrischen Leistung versorgt sind.

9. Transporteinrichtung (100, 200, 300) nach einem der vorstehenden Ansprüche, wobei die Führung (300) eine Erstreckung entsprechend des Förderriemens (110) aufweist und eine entlang der Erstreckung übergangslose Schiene und/oder eine Nut umfasst, an der das Aufnahmeteil (230) des Werkstückträgers (200) aufliegt.

10. Transporteinrichtung (100, 200, 300) nach einem der vorstehenden Ansprüche, wobei die Anziehungskraft durch einen magnetisch geschlossenen Kreis zwischen dem Aufnahmeteil (230) und dem Förderriemen (110) entsteht.
